# EUROPÄISCHE PATENTSCHRIFT

(11) **EP 3 933 433 B1**
(45) Veröffentlichungstag und Bekanntmachung des Hinweises auf die Patenterteilung: **14.09.2022**
(21) Anmeldenummer: 21180678.1
(22) Anmeldetag: 21.06.2021
(51) Int. Cl.: G01S 7/40, G01S 7/497, G01S 13/42, G01S 17/42, G01S 7/04, G01S 7/51, G01S 17/86

(54) **SENSORVORRICHTUNG UND AUSRICHTVERFAHREN**
SENSOR DEVICE AND ALIGNMENT METHOD
DISPOSITIF CAPTEUR ET PROCÉDÉ D'ALIGNEMENT

(30) Priorität: 02.07.2020 DE 102020117428
(43) Veröffentlichungstag der Anmeldung: 05.01.2022
(73) Patentinhaber: SICK AG, 79183 Waldkirch (DE)
(72) Erfinder: Huber, Gregor, 79110 Freiburg (DE); Dollmann, Thomas, 79183 Waldkirch (DE)

(56) Entgegenhaltungen:
- DE-A1- 4 340 756
- DE-A1- 19 946 768
- DE-A1-102010 030 916
- Anonymous: "Lescars Einparkhilfeampel", PEARL.GmbH, 7. Januar 2014 (2014-01-07), Seite 1pp, XP055826943, Gefunden im Internet: URL:https://www.pearl.de/pdocs/NX3047_11_1 33724.pdf [gefunden am 2021-07-22]

## Beschreibung

Die Erfindung betrifft eine Sensorvorrichtung und ein Ausrichtverfahren nach dem Oberbegriff von Anspruch 1 beziehungsweise 8.

Eine Art von Sensor, deren Ausrichtung in der Praxis immer wieder eine Herausforderung darstellt, ist ein Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die Abtastbewegung wird durch einen Drehspiegel oder ein Polygonspiegelrad erreicht, oder es rotiert stattdessen der gesamte Messkopf mit Lichtsendern und Lichtempfängern. Während die meisten bekannten Laserscanner mit einem einzigen Abtaststrahl arbeiten und dementsprechend nur eine zentrale Abtastebene erfassen, gibt es auch Bestrebungen, durch eine Vielzahl von Abtaststrahlen einen Mehrebenenscanner zu realisieren.

Laserscanner werden auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die korrekte Position und Lage eines Sensors im Raum ist regelmäßig eine Grundvoraussetzung für dessen Anwendung. Durch eine genaue Ausrichtung werden meist bessere Ergebnisse erzielt, und eine flexible und genaue Ausrichtung erlaubt eine bessere Anpassung an die jeweiligen Gegebenheiten einer Anwendungssituation.

Durch seine Distanzmessung kann ein Laserscanner seine Position in den drei Raumrichtungen mit recht wenig Aufwand präzise bestimmen. Für die relative Lage oder Orientierung lässt sich das jedoch nicht so einfach lösen. Oft sind Winkelgenauigkeiten unterhalb von 1° gefordert. Selbst wenn eine Wasserwaage zur Hand ist, lässt sich die Winkelgenauigkeit damit häufig nicht oder nicht mit der geforderten Genauigkeit erfassen, weil es keine passenden planen Flächen für deren Auflage gibt. Dabei ist zu beachten, dass nicht unbedingt das Sensorgehäuse auszurichten ist, sondern möglicherweise eine gar nicht sichtbare Referenz wie die Scanebene des Laserscanners. Außerdem gibt es Situationen, in denen die Ausrichtung nicht horizontal erfolgen soll.

Es ist bekannt, in elektronische Geräte wie Smartphones und auch speziell in Laserscanner einen Lagesensor zu integrieren, der die Orientierung zum Schwerkraftfeld misst. Bei einem Smartphone ist die Anzeige dieser Information auf dem integrierten Display unproblematisch. Ein Laserscanner hat keine vergleichbare Anzeige und müsste daher an ein Konfigurationssystem angeschlossen werden, beispielsweise ein Notebook oder Tablet. Zudem sind die Lagesensoren ab Werk nicht kalibriert: Es fehlt der Bezug zwischen der Ausrichtung des Lagesensors und derjenigen des Laserscanners. Das gilt erst recht gegenüber einer Referenz wie der Scanebene, die nicht einmal ein physisches Bauteil betrifft. Damit leistet der Lagesensor keine ausreichende Hilfestellung bei der Ausrichtung am Ort der Anwendung.

Die DE 10 2006 053 359 B4 offenbart ein Lichtgitter, in dem ein Neigungssensor dabei hilft, dessen beide gegenüberstehenden Säulen senkrecht auszurichten. Die entsprechende Anzeige ist an die Libelle einer Wasserwaage angelehnt. Lichtgitter benötigen eine recht spezifische Ausrichtung, und das Konzept ist nicht ohne Weiteres auf andere Sensoren übertragbar. Eine elektronische Libelle ist dann auch nicht allzu intuitiv, zumal wenn es um die Einstellung mehrerer Winkel im Raum geht.

Die DE 20 2011 053 212 B3 offenbar einen Laserscanner mit Drehratensensor, der jedoch für die Kompensation von Unwuchten der Scanbewegung genutzt wird. Die DE 10 2013 104 239 B3 erweitert das um eine von der Drehachse abweichende Richtung sowie überlagerte Translationsbewegungen. In der DE 10 2013 110 581 B4 wird eine Inertialmesseinheit verwendet, um die während einer Bewegung des Laserscanners veränderten Zentren der Scans übereinanderzulegen.

Die EP 1 669 776 A1 beschreibt ein Handgerät mit Laserentfernungsmesser, dessen jeweilige Position und Ausrichtung ein Inertialsensor misst. Damit ist die Ausrichtung bekannt, um dies bei der Messwerterfassung zu berücksichtigen, es wird aber keine spezielle Ausrichtung eingestellt, was auch für ein Handgerät nicht praktikabel wäre.

In der EP 3 176 606 B1 wird ein Laserscanner ausgerichtet, aber das erfolgt anhand eines Referenzziels und nicht eines eigenen Lagesensors. Die EP 2 937 715 B1 ermöglicht es, den Ursprung für den Scanwinkel festzulegen, also den durch die Scanbewegung periodisch veränderten Winkel, indem beim gewünschten Nullwinkel ein Marker auf der Frontscheibe angebracht wird. Das ist aber keine Ausrichtung, und der Laserscanner kennt seine Orientierung mangels Lagesensor gar nicht.

Im Bereich des autonomen Fahrens ist es üblich, das Fahrzeug mit einer Vielzahl von Sensoren auszustatten, zu denen auch Laserscanner und Intertialmesseinheiten zählen. Ein Beispiel hierfür ist die US 8 310 653 B2. Die Inertialmesseinheit ist dabei kein Teil des Laserscanners, und sie wird auch nicht für dessen Ausrichtung verwendet.

Die noch unveröffentlichte deutsche Patentanmeldung mit dem Aktenzeichen DE102019110803 beschreibt einen Sicherheitslaserscanner, der mit einem Neigungssensor seine eigene Verkippung bestimmt und ausgibt. Das dient jedoch keiner Ausrichtung, sondern wird damit eine Manipulation aufgedeckt, falls der Sicherheitslaserscanner während des Betriebs aus der vorgesehenen horizontalen Lage gebracht worden ist.

Von der Firma Leuze electronic wird unter dem Produktnamen RSL440 und von der Firma Pepperl+Fuchs unter dem Produktname R2000 jeweils ein Laserscanner mit integrierter elektronischer Wasserwaage angeboten. Dazu wird aber in beiden Fällen ein Display am Laserscanner verwendet.

Aus der DE 10 2010 030 916 A1 ist ein einstrahliges Distanzmessgerät zur winkelabhängigen, berührungslosen Distanzmessung bekannt. Mittels Wasserwaage oder eines Beschleunigungssensors wird die Orientierung zu einem Zielwinkel bestimmt. Auf einem Display wird angezeigt, in welche Richtung das Distanzmessgerät verkippt werden soll, um sich dem Zielwinkel zu nähern, während mit einer LED angezeigt wird, wenn der Zielwinkel erreicht ist.

Die DE 199 46 768 A1 offenbart eine elektronische Wasserwaage, in der die Lage der Luftblase in der Libelle mit zwei Infrarotlichtschranken gemessen wird. Im Viereck angeordnete LEDs zeigen eine Neigung an, und zwar in der Weise, dass zunächst eine LED der höchsten Ecke eine andere Farbe annimmt als die übrigen LEDs. Wird dann eine zweite Ecke dazu auf gleiche Höhe gebracht, so nehmen die LEDs dieser beiden Ecken die andere Farbe an, womit dann eine Achse ausgerichtet ist. Wenn sich dann abschließend noch die gegenüberliegende Kante auf gleicher Höhe befindet, leuchten alle LEDs in der anderen Farbe, um eine komplett waagerechte zweidimensionale Fläche anzuzeigen.

Es ist daher Aufgabe der Erfindung, die Ausrichtung eines Sensors zu verbessern.

Diese Aufgabe wird durch eine Sensorvorrichtung und ein Ausrichtverfahren nach Anspruch 1 beziehungsweise 8 gelöst. Die Sensorvorrichtung oder kurz der Sensor ist vorzugsweise ein Laserscanner oder ein Radar, und sie ist in einem Gehäuse untergebracht. Ein Lagesensor, der beispielsweise als IMU (Intertial Measurement Unit) ausgebildet ist und als eine Art elektronische Wasserwaage fungiert, misst seine Orientierung bezüglich des Schwerkraftfeldes. Diese Messung erfolgt vorzugsweise in beiden Winkeln zur Horizontalen, also in Rollwinkel und Nickwinkel, oder in einer einfachen Ausführungsform nur für einen dieser Winkel. Der Gierwinkel ist gegen die Schwerkraft nicht messbar und wird beispielsweise durch Konvention wie in EP 2 937 715 B1 kalibriert.

Eine Steuer- und Auswertungseinheit bestimmt mit Hilfe des Lagesensors die eigene Ausrichtung der Sensorvorrichtung und vergleicht die so gemessene tatsächliche Ausrichtung mit einer Sollausrichtung. Ein daraus resultierendes Vergleichsergebnis wird auf einer Anzeigeeinrichtung dargestellt. Ein Anwender kann daraus erkennen, ob die Ausrichtung der Sollausrichtung entspricht und wie gegebenenfalls die gewünschte Ausrichtung erreicht werden kann.

Die Erfindung geht von dem Grundgedanken aus, eine einfache Anzeigeeinrichtung zu verwenden, die aus wenigen Lichtquellen besteht. Dafür sind mindestens drei Lichtquellen an über das Gehäuse verteilten Positionen nach Art eines Dreibeins vorgesehen. Die Lichtquellen können wenigstens zwei Anzeigezustände einnehmen, von denen einer für eine korrekte Ausrichtung und ein weiterer für eine noch nicht passende Ausrichtung steht. Die Lichtquellen werden entsprechend des Vergleichs zwischen tatsächlicher Ausrichtung und Sollausrichtung in Anzeigezustände gebracht, die gemeinsam das Vergleichsergebnis anzeigen.

Die Erfindung hat den Vorteil, dass die Ausrichtung der Sensorvorrichtung vor Ort bei der Inbetriebnahme erheblich vereinfacht wird. Der Monteur kann ohne zusätzliche Ausrüstung oder Messung sofort die korrekte Ausrichtung oder Lage erkennen und bei Bedarf korrigieren. Die Anzeigeeinrichtung ist extrem kostengünstig und anspruchslos, aber dennoch intuitiv erfassbar. Sie kann sogar noch sofort vom ungeschulten Monteur erfassbare Hilfestellungen gegeben, in welcher Weise eine Korrektur erfolgen sollte.

Die Anzeigezustände beziehen sich auf eine durch die Position der anzeigenden Lichtquelle repräsentierte Achse. Damit hat der Anzeigezustand der Lichtquelle einen direkten Ortsbezug zu dem Vergleichsergebnis. Der Monteur oder Servicetechniker erkennt sofort, in welcher Achse die gewünschte Ausrichtung erreicht ist und wo und in welcher noch nachjustiert werden muss. Vorzugsweise liegt die Lichtquelle selbst auf der repräsentierten Achse, es ist aber auch ein Versatz denkbar, der dann bevorzugt intuitiv erfassbar ist.

Die Lichtquellen können jeweils drei Anzeigezustände annehmen, wobei die Steuer- und Auswertungseinheit dafür ausgebildet ist, an einer Lichtquelle den zweiten Anzeigezustand bei zu tiefer Ausrichtung und einen dritten Anzeigezustand bei zu hoher Ausrichtung anzuzeigen. Eine Lichtquelle zeigt damit nicht nur binär an, ob der sie betreffende Teil der Ausrichtung in Ordnung ist. Falls vielmehr die Ausrichtung noch nicht stimmt, wird eine Richtung angegeben, in der die Sollausrichtung erreicht werden kann. Damit kann eine Korrektur wesentlich leichter erfolgen. Es wäre denkbar, den zweiten und dritten Anzeigezustand nicht als diskrete Einheit zu begreifen, sondern ihm noch eine Intensitätsinformation zu geben, die vermittelt, wie groß die Abweichung ist. Beispielsweise leuchtet die Lichtquelle dafür heller, blinkt schneller oder zeigt Übergangsfarben an, wie orange für leicht und rot für stark dejustiert.

Die Lichtquellen sind bevorzugt dafür ausgebildet, Anzeigezustände als unterschiedliche Farben einzunehmen. Beispielsweise entspricht grünes Licht dem ersten Anzeigezustand, blaues Licht dem zweiten Anzeigezustand und rotes Licht dem dritten Anzeigezustand. Die konkret genannten Farben sind natürlich austauschbar, der Anwender muss lediglich über die Bedeutung informiert sein. Auch das Ausschalten einer Lichtquelle kann als Anzeigezustand und insbesondere als Farbe interpretiert werden. Kombiniert oder alternativ können Blinksequenzen eingesetzt werden, oder eine Lichtquelle besteht aus mehreren Lichtpunkten, die Leuchtmuster bilden. Das lässt sich auch kombinieren. Beispielsweise bedeutet dann ein schnelles rotes Blinken, dass die Ausrichtung noch deutlich zu hoch ist, und bei eine Nachjustierung verlangsamt sich dann das Blinken und geht schließlich bei Erreichen der Sollausrichtung in grünes Dauerlicht über. Die Lichtquellen sind vorzugsweise als mehrfarbige LEDs ausgebildet. Das ist eine besonders einfache und kostengünstige Ausgestaltung, mit der sich verschiedene Anzeigezustände erreichen lassen

Das Gehäuse weist bevorzugt eine viereckige Querschnittsfläche auf, und die Lichtquellen sind in den Ecken angeordnet, insbesondere vier Lichtquellen in allen vier Ecken. Die Querschnittsfläche kann über das Gehäuse hin variieren, hier wird erst einmal nur Bezug auf den Bereich in Höhe der Lichtquellen genommen. Außerdem handelt es sich um eine grobe Grundform, die abgerundete Ecken oder Kanten zulässt. Auch bei einer Kreis- oder Ellipsenform ist die analoge Anordnung mit Lichtquellen im 90°-Abstand vorteilhaft.

Die Sensorvorrichtung weist bevorzugt eine Schnittstelle für die Vorgabe der Sollausrichtung auf. Das kann eine drahtgebundene oder drahtlose Schnittstelle zum Anschluss eines Konfigurationsgerätes sein, oder lediglich ein Bedienelement am Gehäuse. Als Grundeinstellung oder Default-Vorgabe wird bevorzugt eine horizontale Orientierung angenommen, aber über die Schnittstelle kann von einer solchen Grundeinstellung gezielt abgewichen werden.

Die Sensorvorrichtung ist bevorzugt als Laserscanner mit mindestens einer Scanebene ausgebildet und weist mindestens einen Lichtsender zum Aussenden von Sendelicht, eine bewegliche Ablenkeinheit zur periodischen Ablenkung des Sendelichts und einen Lichtempfänger zum Empfangen des von Objekten in der Scanebene remittiertem Sendelichts auf, wobei die Steuer- und Auswertungseinheit dafür ausgebildet ist, anhand einer Lichtlaufzeit des ausgesandten und wieder empfangenen Sendelichts Entfernungen zu messen. Dafür sind alle bekannten Lichtlaufzeitverfahren denkbar, wie Pulslaufzeitverfahren, Phasenverfahren oder Pulsmittelungsverfahren. Wie einleitend schon erwähnt, kann die periodische Ablenkung mit Hilfe eines Drehspiegels oder dadurch erfolgen, dass ein Messkopf mit Lichtsender und Lichtempfänger rotiert.

Der Laserscanner ist vorzugsweise als Mehrebenenscanner ausgebildet, bei dem das Sendelicht mehrere voneinander separierte Abtaststrahlen bildet beziehungsweise der Lichtempfänger das remittierte Sendelicht als mehrere voneinander separierte Abtaststrahlen empfängt. Abtaststrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Somit tastet jeder Abtaststrahl eine von mehreren Scanebenen ab.

Der Lagesensor ist bevorzugt zu einer Scanebene kalibriert. Diese Kalibrierung erfolgt vorzugsweise ab Werk bei Herstellung des Laserscanners. Der Lagesensor ist nicht zum Gehäuse, sondern zu der für die Erfassungsfunktion des Laserscanners maßgebliche Scanebene kalibriert. Zwar wird typischerweise die Scanebene zum Gehäuse ausgerichtet, aber dabei gibt es gewisse Toleranzen. Bei einem Laserscanner mit nur einer Scanebene bildet natürlich diese einzige Scanebene die Referenz. Bei einem Mehrlagenscanner wird vorzugsweise eine zentrale Ebene bei Elevation 0° herangezogen.

Bei dem erfindungsgemäßen Ausrichtverfahren wird mittels des Lagesensors eine tatsächliche Ausrichtung des Sensors bestimmt, mit einer Sollausrichtung verglichen und ein Vergleichsergebnis angezeigt. Das Vergleichsergebnis wird durch drei an über den Sensor verteilten Positionen angeordneten Lichtquellen angezeigt, die jeweils einen ersten Anzeigezustand für eine richtige Position oder einen zweiten Anzeigezustand für eine noch nicht richtige Ausrichtung einnehmen. Der Sensor ist insbesondere eine Ausführungsform der erfindungsgemäßen Sensorvorrichtung.

Dabei ist der Sensor vorzugsweise als Laserscanner mit mindestens einer Scanebene ausgebildet, die von einem Abtaststrahl periodisch abgetastet wird, und der Lagesensor wird vorab, insbesondere schon im Werk, zu der Scanebene kalibriert, indem der Abtaststrahl auf ein kooperatives Ziel geführt und ein Bild des Ziels aufgenommen wird, insbesondere mit einer IR-Kamera, und das Bild ausgewertet wird, um die Ausrichtung der Scanebene zu bestimmen. Um den Sensor so kalibrieren zu können, sollte zuvor auch die Kamera beziehungsweise die im Kamerabild sichtbare Laserlinie der Scanebene zur Aufnahme des Sensors beziehungsweise zur Erdgravitation kalibriert werden. Vor Ort im Feld ist die Scanebene ohne Hilfsmittel nicht erkennbar. Im Werk kann aber das üblicherweise infrarote Licht des Abtaststrahls sichtbar gemacht werden, und dies wird ausgenutzt, um den Lagesensor bezüglich der Scanebene zu kalibrieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines Laserscanners;
- Fig. 2a-b: eine schematische Darstellung eines Laserscanners in Sollausrichtung und mit entsprechender Anzeige der korrekten Ausrichtung durch mehrere LEDs als Draufsicht beziehungsweise Vorderansicht;
- Fig. 3a-b: eine schematische Darstellung entsprechend Figur 2a-b bei Verkippung, hier um einen Rollwinkel; und
- Fig. 4a-b: eine schematische Darstellung entsprechend Figur 2a-b bei einer weiteren Verkippung nun sowohl im Roll- wie im Nickwinkel.

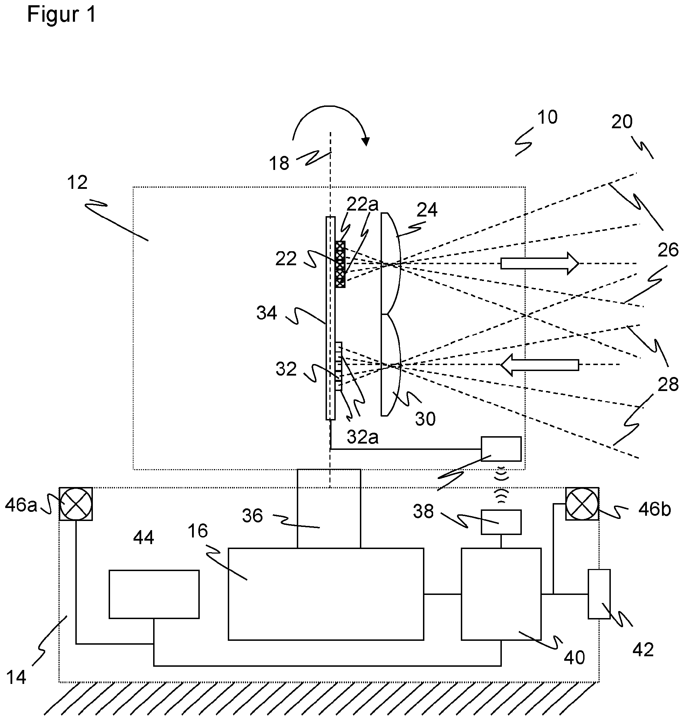

Figur 1 zeigt eine schematische Schnittdarstellung durch einen optoelektronischen Sensor 10 in einer Ausführungsform als Mehrebenenlaserscanner. Die hier vorgestellte Ausrichtung ist für einen derartigen Laserscanner besonders vorteilhaft. Sie ist aber ebenso für einen Laserscanner mit nur einer Scanebene geeignet. Auch andere optoelektronische Sensoren sind denkbar, die ohne periodische Scanbewegung arbeiten. Denkbar sind auch nicht-optische Sensoren, insbesondere ein Radar, dessen Funktionsweise dem beschriebenen Laserscanner unter Verwendung eines anderen Bereichs des elektromagnetischen Spektrums ähnelt.

Der Sensor 10 umfasst in grober Aufteilung eine bewegliche Ablenkeinheit 12 und eine Sockeleinheit 14. Die Ablenkeinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Ablenkeinheit 12 in eine Bewegung um eine Drehachse 18 versetzt, um so einen Überwachungsbereich 20 periodisch abzutasten.

In der Ablenkeinheit 12 erzeugt ein Lichtsender 22 mit mehreren Lichtquellen 22a, beispielsweise LEDs oder Laser in Form von Kantenemittern oder VCSELs, mit Hilfe einer gemeinsamen Sendeoptik 24 mehrere Sendelichtstrahlen 26, die in den Überwachungsbereich 20 ausgesandt werden. Im dargestellten Beispiel sind es fünf Sendelichtstrahlen 26 für fünf Abtastebenen, es können mehr, auch deutlich mehr, und ebenso weniger Sendelichtstrahlen 26 sein. Anstelle einer gemeinsamen Sendeoptik 24 sind Einzeloptiken möglich. Die mehreren Sendelichtstrahlen 26 können auch dadurch entstehen, dass das Licht einer Lichtquelle oder einiger Lichtquellen durch ein Strahlteilerelement, ein diffraktives optisches Element oder dergleichen aufgeteilt wird. In einer weiteren Ausführungsform wird flächig oder mit einer Lichtlinie beleuchtet, und das Sendelicht wird erst empfangsseitig in Abtaststrahlen unterteilt.

Treffen die Sendelichtstrahlen 26 in dem Überwachungsbereich 20 auf ein Objekt, so kehren entsprechende remittierte Lichtstrahlen 28 zu dem Sensor 10 zurück. Die remittierten Lichtstrahlen 28 werden von einer gemeinsamen Empfangsoptik 30 auf einen Lichtempfänger 32 mit mehreren Lichtempfangselementen 32a geführt, die jeweils ein elektrisches Empfangssignal erzeugen. Die Lichtempfangselemente 32a können separate Bauteile oder Pixel einer integrierten Matrixanordnung sein, beispielsweise Photodioden, APDs (Avalanche Diode) oder SPADs (Single-Photon Avalanche Diode). Die Bemerkungen zur Sendeseite gelten sinngemäß auch hier. Es können mehrere Einzeloptiken vorgesehen sein, und mehrere Abtaststrahlen können auf einem gemeinsamen Lichtempfangselement erfasst werden.

Lichtsender 22 und Lichtempfänger 32 sind in dieser Ausführungsform gemeinsam auf einer Leiterkarte 34 angeordnet, die auf der Drehachse 18 liegt und mit der Welle 36 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 22 und Lichtempfänger 32 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 38 verbindet die bewegliche Ablenkeinheit 12 mit der ruhenden Sockeleinheit 14. Dort befindet sich eine Steuer- und Auswertungseinheit 40, die zumindest teilweise auch auf der Leiterkarte 34 oder an anderem Ort in der Ablenkeinheit 12 untergebracht sein kann. Insbesondere ist vorstellbar, einen Teil der Auswertung schon im Lichtempfänger 32 unterzubringen, etwa durch eine ASIC-Bauweise (Application-Specific Integrated Circuit), wobei einzelne Zellen gleich digital auswertet und weiterverarbeitet werden. Die Steuer- und Auswertungseinheit 40 steuert den Lichtsender 22 und erhält die Empfangssignale des Lichtempfängers 32 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Ablenkeinheit 12 bestimmt.

Zur Auswertung wird die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene, sofern es mehrere Abtastebenen gibt, ist über die Identität des jeweiligen Abtaststrahls 26, 28 ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 42 ausgegeben werden. Die Sensorschnittstelle 42 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie einleitend kurz vorgestellt.

Der dargestellte Sensor 10 ist ein Laserscanner mit rotierendem Messkopf, nämlich der Ablenkeinheit 12. Alternativ ist auch eine periodische Ablenkung mittels Drehspiegel oder einem Facettenspiegelrad denkbar. Eine weitere alternative Ausführungsform schwenkt die Ablenkeinheit 12 hin und her, entweder anstelle der Drehbewegung oder zusätzlich um eine zweite Achse senkrecht zur Drehbewegung, um auch in Elevation eine Abtastbewegung zu erzeugen. Weiterhin kann die Scanbewegung zur Erzeugung der Scanebene stattdessen auch mit anderen bekannten Methoden erzeugt werden, beispielsweise MEMS-Spiegeln, optical phased arrays oder akusto-optischen Modulatoren.

Während der Bewegung der Ablenkeinheit 12 wird durch jeden der Sendelichtstrahlen 26 jeweils eine Fläche abgetastet. Nur bei einem Ablenkwinkel von 0°, dem mittleren der in Figur 1 gezeigten Sendelichtstrahlen 26, wird dabei eine Abtast- oder Scanebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Flächen werden hier vereinfachend als Abtastebenen bezeichnet.

In einer praktischen Anwendung muss der Sensor 10 richtig ausgerichtet montiert werden. Deshalb ist ein Lagesensor 44 vorgesehen, der als IMU (Inertial Measurement Unit) ausgebildet sein kann. Die jeweilige Ausrichtinformation des Lagesensors 44 wird von der Steuer- und Auswertungseinheit 40 eingelesen. Über den Sensor 10 verteilt sind außerdem mindestens drei Lichtquellen 46a-b oder LEDs angeordnet, von denen in der Schnittansicht der Figur 1 nur zwei zu erkennen sind. Die Lichtquellen 4ba-b liegen vorzugsweise möglichst weit auseinander und in einer gemeinsamen Ebene. Sie werden von der Steuer- und Auswertungseinheit 40 angesteuert, um anzuzeigen, ob eine Sollausrichtung erreicht ist oder welche Abweichung zwischen der tatsächlichen Ausrichtung gemäß dem Lagesensor 44 und der Sollausrichtung besteht.

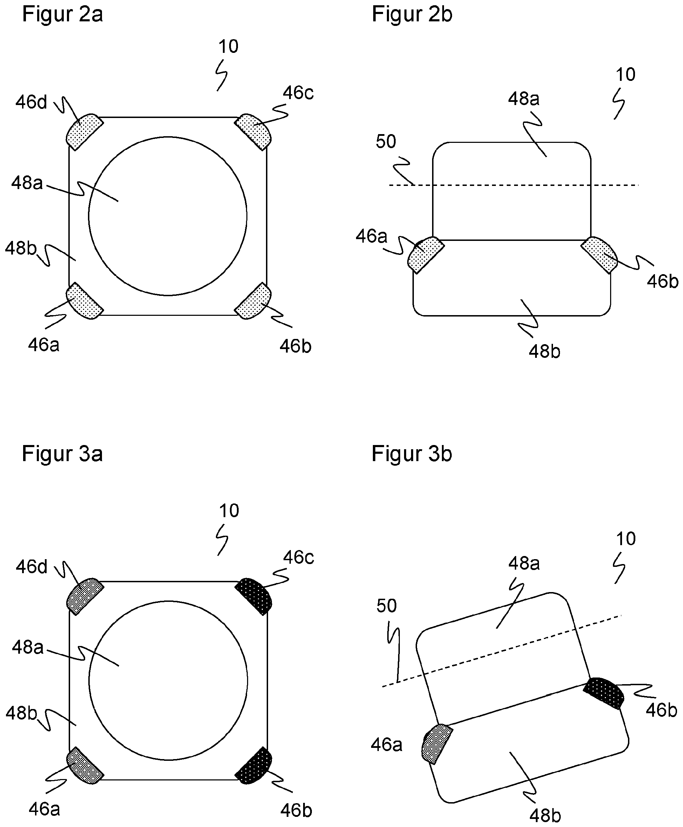

Figur 2a-b zeigt den Sensor 10 in einer schematischen Darstellung ohne dessen einzelne Elemente, wobei Figur 2a eine Draufsicht und Figur 2b eine Vorderansicht ist. Dargestellt sind lediglich ein Gehäuse mit einem oberen Gehäuseteil 48a und einem unteren Gehäuseteil 48b sowie die Lichtquellen 46a-d. Die beiden Gehäuseteile 48a-b können der Ablenkeinheit 12 und der Sockeleinheit 14 entsprechen, aber dabei kann es auch einen Übergangsbereich geben, in dem diese Zuordnung noch nicht stimmt. Das obere Gehäuseteil 48a ist mindestens teilweise transparent, um die Abtaststrahlen 26, 28 passieren zu lassen, und wird auch als Haube oder Frontscheibe bezeichnet. In Figur 2b ist zur Veranschaulichung die einzige oder die zentrale Scanebene 50 bei Elevation 0° eingezeichnet.

In diesem Ausführungsbeispiel werden demnach vier Lichtquellen 46a-d statt der Mindestanzahl von drei Lichtquellen eingesetzt. Sie sitzen an den Ecken des viereckigen beziehungsweise rechteckigen Querschnitts an der Oberseite des unteren Gehäuseteils 48b und damit in größtmöglichem Abstand zueinander und in derselben Ebene.

In Figur 2a-b ist die Sollausrichtung eine horizontale Orientierung der Scanebene 50 und damit eine aufrechte Lage des Sensors 10. Das kann auch so ausgedrückte werden, dass Nick- und Rollwinkel 0° betragen sollen. Beides kann der Lagesensor 44 bezüglich der Richtung der Schwerkraft messen, den Gierwinkel dagegen in dieser Orientierung des Sensors 10 nicht. Der Gierwinkel entspricht dem jeweiligen Drehwinkel der Ablenkeinheit 12, und dessen Ursprung kann unabhängig von der Ausrichtung des Sensors 10 im Feld festgelegt oder beispielsweise wie in der einleitend genannten EP 2 937 715 B1 vom Benutzer vorgegeben werden. Alternativ zu der Horizontalen als Sollausrichtung kann ein anderer Roll- und Nickwinkel über die Sensorschnittstelle 42 oder ein nicht gezeigtes Bedienelement vorgegeben werden. Bei schräger Ausrichtung verschieben sich die Winkel, die von dem Lagesensor 44 gemessen werden können, und es kann insbesondere auch der Gierwinkel gemessen und angezeigt werden.

Die Lichtquellen 46a-d können von der Steuer- und Auswertungseinheit 40 mit unterscheidbaren Lichtsignalen angesteuert werden. Vorzugsweise handelt es sich um mehrfarbige Lichtquellen 46a-d, insbesondere Multicolor- oder RGB-LEDs. Am Beispiel unterschiedlicher Farben wird die Anzeige der Ausrichtung im Folgenden beschrieben. Das ist eine besonders eingängige und gut erkennbare Anzeigemöglichkeit. Es wäre aber auch eine unterschiedliche Helligkeit oder Abfolge eines Blinksignals denkbar. Mehrere Anzeigemodalitäten lassen sich auch kombinieren, indem beispielsweise schnelles Blinken in einer bestimmten Farbe eine starke Abweichung in einer durch die Farbe codierten Richtung bedeutet. Die verschiedenen Signale der Lichtquellen 46a-d ersetzen ein Display.

Der Sensor 10 kann zum Ausrichten in einen entsprechenden Ausrichtmodus versetzt werden, der über die Sensorschnittstelle 42 oder eine Taste am Sensor 10 gestartet wird. Außerhalb des Ausrichtmodus sind die Lichtquellen 46a-d vorzugsweise inaktiv oder werden für andere Zwecke genutzt. Die Steuer- und Auswertungseinheit 40 führt dann einen beispielsweise zyklisch wiederholten Vergleich zwischen der von dem Lagesensor 44 erfassten tatsächlichen Ausrichtung und der fest oder durch den Benutzer vorgegebenen Sollausrichtung durch. An den Lichtquellen 46a-d gibt die Steuer- und Auswertungseinheit 40 Lichtsignale, ob auf der entsprechenden Achse die gewünschte Ausrichtung erreicht ist oder nicht. Vorteilhafterweise wird die Anzeige für eine noch nicht korrekte Ausrichtung noch nach der Richtung differenziert. In einem konkreten Beispiel steht eine grüne Anzeige für eine richtige Ausrichtung, blau für zu tief und rot für zu hoch. Die konkreten Farben sind austauschbar, solange der Anwender die Bedeutung kennt. Für feinere Abstufungen können zusätzliche Modalitäten wie die Helligkeit hinzukommen, die das Ausmaß der Abweichung darstellen.

In dem Beispiel der Figur 2a-b ist der Sensor bereits korrekt horizontal ausgerichtet. Alle vier Lichtquellen 46a-d zeigen deshalb dieselbe Farbe an, beispielsweise grün, die für richtige Ausrichtung steht.

Figur 3a-b zeigt ein weiteres Beispiel, in dem der Sensor 10 im Rollwinkel verkippt ist. Die Definition des Rollwinkels ist eine Konvention, die hier so gewählt ist, dass der Rollwinkel in der einen vertikalen Symmetrieebene und der Nickwinkel in der anderen vertikalen Symmetrieebene gemessen wird. Die Lichtquellen 46a,d an der linken Seite leuchten blau, diejenigen an der rechten Seite rot, um anzuzeigen, dass der Sensor 10 links relativ zu rechts angehoben werden beziehungsweise umgekehrt rechts relativ zu links abgesenkt werden muss.

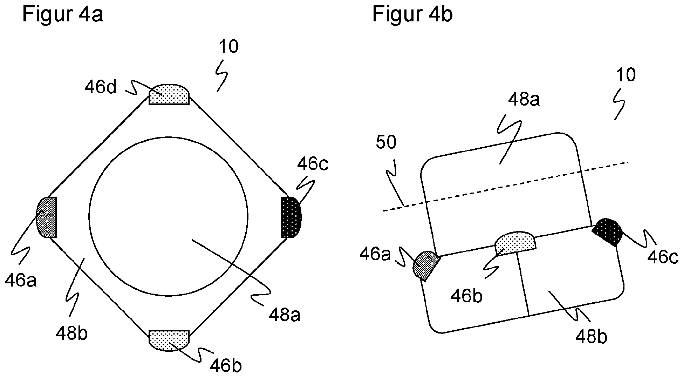

Figur 4a-b zeigt nochmals ein Beispiel, in dem der Sensor 10 nun im Rollwinkel und im Nickwinkel verkippt ist. Zu beachten ist, dass in Figur 4b die Darstellung gegenüber den Figuren 2b und 3b um 90° aus der Zeichenebene herausgedreht ist. Da der Sensor 10 in diesem Beispiel gerade bezüglich der Diagonalen zur Grundfläche verkippt ist, zeigen die Lichtquellen 46b,d grün, da auf dieser Achse die Ausrichtung bereits stimmt. Auf der Gegendiagonalen muss korrigiert werden, indem bezogen auf die Zeichnung der Sensor links relativ zu rechts angehoben beziehungsweise umgekehrt rechts relativ zu links abgesenkt wird. So können in diesem konkreten Beispiel Roll- und Nickwinkel gleichzeitig korrigiert werden. Im Allgemeinen würde der Sensor 10 unterschiedliche Roll- und Nickwinkel aufweisen, und dazu würden auch die Lichtquellen 46b,d rot beziehungsweise blau aufleuchten.

Je nach Form und Größe des Sensors 10 können die Positionen und Anzahl der Lichtquellen 46a-d variiert werden, solange es mehr als drei Lichtquellen sind, die nicht kollinear angeordnet sind und somit eine Ebene im Raum definieren. Die Anzeige kann auch akustisch unterstützt werden.

Der Lagesensor 44 wird vorzugsweise ab Werk kalibriert ausgeliefert. Die Kalibrierung muss nicht unbedingt im Bezug zu einer Fläche des Gehäuses 48a-b erfolgen. Für einen Laserscanner ist häufig die Scanebene die bessere Referenz, da hier die Messwerte erfasst werden. Aufgrund von Toleranzen ist nicht gewährleistet, dass die Scanebene zu einer Gehäusefläche parallel ist.

Die Kalibrierung kann beispielsweise dadurch erfolgen, dass in der Fertigung zunächst der Lagesensor 44 zu einer oder mehreren bekannten Ausrichtungen des Laserscanners kalibriert wird. Dann wird die Scanebene zu einer dieser Ausrichtungen vermessen. Eine praktische Möglichkeit dafür ist, ein weißes Ziel in der Scanebene anzuordnen und während des Scannens des Laserscanners ein Bild dieses Ziels mit einer IR-Kamera aufzunehmen. Im Kamerabild ist die Laserscanlinie auf dem Ziel zu sehen, und über Bildverarbeitungsalgorithmen kann die Lage als Winkel bestimmt werden. Daraus lässt sich dann ein Korrekturwert berechnen, der die die Messdaten des Lagescanners 44 auf die Scanebene und nicht mehr auf das Gehäuse 48a-b referenziert.

## Patentansprüche

1. Sensorvorrichtung (10), insbesondere Laserscanner oder Radarsensor, die ein Gehäuse (48a-b), einen Lagesensor (44) zur Bestimmung einer Ausrichtung durch Messung einer Orientierung bezüglich des Schwerkraftfeldes, eine Anzeigeeinrichtung (46a-d) zum Anzeigen einer Ausrichtinformation sowie eine Steuer- und Auswertungseinheit (40) aufweist, die dafür ausgebildet ist, mit Hilfe des Lagesensors (44) eine eigene Ausrichtung der Sensorvorrichtung (10) zu bestimmen, mit einer Sollausrichtung zu vergleichen und ein Vergleichsergebnis durch die Anzeigeeinrichtung (46a-d) anzuzeigen,
**dadurch gekennzeichnet,**
**dass** die Anzeigeeinrichtung (46a-d) mindestens drei Lichtquellen (46a-d) an über das Gehäuse (48a-b) verteilten Positionen aufweist, wobei jede Lichtquelle (46a-d) mindestens drei Anzeigezustände einnehmen kann, und dass die Steuer- und Auswertungseinheit (40) dafür ausgebildet ist, das Vergleichsergebnis durch Anzeigezustände der Lichtquellen (46a-d) anzuzeigen, nämlich einen ersten Anzeigezustand für richtige Ausrichtung, einen zweiten Anzeigezustand bei zu tiefer Ausrichtung und einen dritten Anzeigezustand bei zu hoher Ausrichtung, wobei sich die Anzeigezustände auf eine durch die Position der anzeigenden Lichtquelle (46a-d) repräsentierte Achse beziehen.

2. Sensorvorrichtung (10) nach Anspruch 1,
wobei die Lichtquellen (46a-d) dafür ausgebildet sind, Anzeigezustände als unterschiedliche Farben einzunehmen.

3. Sensorvorrichtung (10) nach einem der vorhergehenden Ansprüche,
wobei die Lichtquellen (46a-d) als mehrfarbige LEDs ausgebildet sind.

4. Sensorvorrichtung (10) nach einem der vorhergehenden Ansprüche,
wobei das Gehäuse (48a-b) eine viereckige Querschnittsfläche aufweist und die Lichtquellen (46a-d) in den Ecken angeordnet sind, insbesondere vier Lichtquellen (46a-d) in allen vier Ecken.

5. Sensorvorrichtung (10) nach einem der vorhergehenden Ansprüche,
die eine Schnittstelle (42) für die Vorgabe der Sollausrichtung aufweist.

6. Sensorvorrichtung (10) nach einem der vorhergehenden Ansprüche,
die als Laserscanner mit mindestens einer Scanebene (50) ausgebildet ist und mindestens einen Lichtsender (22) zum Aussenden von Sendelicht (26), eine bewegliche Ablenkeinheit (12) zur periodischen Ablenkung des Sendelichts (26) und einen Lichtempfänger (32) zum Empfangen des von Objekten in der Scanebene (50) remittiertem Sendelichts (28) aufweist, wobei die Steuer- und Auswertungseinheit (40) dafür ausgebildet ist, anhand einer Lichtlaufzeit des ausgesandten und wieder empfangenen Sendelichts (26, 28) Entfernungen zu messen.

7. Sensorvorrichtung (10) nach Anspruch 6,
wobei der Lagesensor (44) zu einer Scanebene (50) kalibriert ist.

8. Ausrichtverfahren für einen Sensor (10), insbesondere für eine Sensorvorrichtung nach einem der vorhergehenden Ansprüche, wobei mittels eines Lagesensors (44) eine tatsächliche Ausrichtung des Sensors (10) durch Messung einer Orientierung bezüglich des Schwerkraftfeldes bestimmt, mit einer Sollausrichtung verglichen und ein Vergleichsergebnis angezeigt wird,
**dadurch gekennzeichnet,**
**dass** das Vergleichsergebnis durch drei an über den Sensor (10) verteilten Positionen angeordneten Lichtquellen (46a-d) angezeigt wird, die jeweils einen ersten Anzeigezustand für eine richtige Position, einen zweiten Anzeigezustand bei zu tiefer Ausrichtung und einen dritten Anzeigezustand bei zu hoher Ausrichtung einnehmen, wobei sich die Anzeigezustände auf eine durch die Position der anzeigenden Lichtquelle (46a-d) repräsentierte Achse beziehen.

9. Ausrichtverfahren nach Anspruch 8,
wobei der Sensor (10) als Laserscanner mit mindestens einer Scanebene (50) ausgebildet ist, die von einem Abtaststrahl (26, 28) periodisch abgetastet wird, und wobei der Lagesensor (44) vorab zu der Scanebene (50) kalibriert wird, indem der Abtaststrahl (26, 28) auf ein kooperatives Ziel geführt und ein Bild des Ziels aufgenommen wird, insbesondere mit einer IR-Kamera, und das Bild ausgewertet wird, um die Ausrichtung der Scanebene (50) zu bestimmen.

## Claims

1. A sensor device (10), in particular a laser scanner or a radar sensor, comprising a housing (48a-b), a position sensor (44) for determining an alignment by measuring an orientation with respect to the gravitational field, a display device (46a-d) for displaying an alignment information, and a control and evaluation unit (40) configured to determine an own alignment of the sensor device (10) with the aid of the position sensor (44), to compare it with a desired alignment and to display a comparison result by means of the display device (46a-d), **characterized in that** the display device (46a-d) comprises at least three light sources (46a-d) at positions distributed over the housing (48a-b), wherein each light source (46a-d) can assume at least three display states, and **in that** the control and evaluation unit (40) is configured to display the comparison result by display states of the light sources (46a-d), namely a first display state for correct alignment, a second display state for too low alignment, and a third display state for too high alignment, the display states relating to an axis represented by the position of the displaying light source (46a-d).

2. The sensor device (10) according to claim 1,
wherein the light sources (46a-d) are configured to assume display states as different colors.

3. The sensor device (10) according to any of the preceding claims,
wherein the light sources (46a-d) are configured as multicolor LEDs.

4. The sensor device (10) according to any of the preceding claims,
wherein the housing (48a-b) comprises a quadrangular cross-sectional area and the light sources (46a-d) are arranged in the corners, in particular four light sources (46a-d) in all four corners.

5. The sensor device (10) according to any of the preceding claims,
comprising an interface (42) for specifying the desired alignment.

6. The sensor device (10) according to any of the preceding claims,
that is configured as a laser scanner having at least one scanning plane (50) and comprising at least one light transmitter (22) for transmitting transmitted light (26), a movable deflection unit (12) for periodically deflecting the transmitted light (26), and a light receiver (32) for receiving the transmitted light (28) that has been remitted by objects in the scanning plane (50), the control and evaluation unit (40) being configured to measure distances on the basis of a light time of flight of the transmitted light (26, 28) that is transmitted and received again.

7. The sensor device (10) according to claim 6,
wherein the position sensor (44) is calibrated to a scan plane (50).

8. An alignment method for a sensor (10), in particular for a sensor device according to any of the preceding claims, wherein by means of a position sensor (44) an actual alignment of the sensor (10) is determined by measuring an orientation with respect to the gravitational field, is compared with a desired alignment, and a comparison result is displayed,
**characterized in that** the comparison result is displayed by three light sources (46a-d) arranged at positions distributed over the sensor (10), each light source (46a-d) assuming a first display state for a correct position, a second display state for too low alignment, and a third display state for too high alignment, the display states relating to an axis represented by the position of the displaying light source (46a-d).

9. The alignment method according to claim 8,
wherein the sensor (10) is configured as a laser scanner having at least one scanning plane (50) that is periodically scanned by a scanning beam (26, 28), and wherein the position sensor (44) is calibrated in advance with respect to the scanning plane (50) by guiding the scanning beam (26, 28) to a cooperative target and taking an image of the target, in particular with an IR camera, and evaluating the image to determine the alignment of the scanning plane (50).

## Revendications

1. Dispositif de capteur (10), en particulier un scanner laser ou un capteur radar, comprenant un boîtier (48a- b), un capteur de position (44) pour déterminer un alignement par mesure d'une orientation par rapport au champ gravitationnel, un dispositif d'affichage (46a- d) pour afficher une information d'alignement, ainsi qu'une unité de commande et d'évaluation (40) configurée pour déterminer un alignement propre du dispositif de détection (10) à l'aide du capteur de position (44), pour le comparer à un alignement souhaité et pour afficher un résultat de comparaison au moyen du dispositif d'affichage (46a- d),
**caractérisé en ce que** le dispositif d'affichage (46a- d) comprend au moins trois sources lumineuses (46a- d) à des positions réparties sur le boîtier (48a- b), chaque source lumineuse (46a- d) pouvant prendre au moins trois états d'affichage, et **en ce que** l'unité de commande et d'évaluation (40) est configurée pour afficher le résultat de la comparaison par des états d'affichage des sources lumineuses (46a- d), à savoir un premier état d'affichage pour un alignement correct, un deuxième état d'affichage pour un alignement trop basse, et un troisième état d'affichage pour un alignement trop élevé, les états d'affichage se rapportant à un axe représenté par la position de la source lumineuse d'affichage (46a- d).

2. Dispositif de capteur (10) selon la revendication 1,
dans lequel les sources lumineuses (46a- d) sont configurées pour prendre des états d'affichage sous forme de couleurs différentes.

3. Dispositif de capteur (10) selon l'une des revendications précédentes,
dans lequel les sources de lumière (46a- d) sont configurées comme des LED multicolores.

4. Dispositif de capteur (10) selon l'une des revendications précédentes,
dans lequel le boîtier (48a- b) présente une section transversale quadrangulaire et les sources lumineuses (46a- d) sont disposées dans les coins, en particulier quatre sources lumineuses (46a- d) dans les quatre coins.

5. Dispositif de capteur (10) selon l'une des revendications précédentes, comprenant une interface (42) pour spécifier l'alignement souhaité.

6. Dispositif de capteur (10) selon l'une des revendications précédentes,
qui est configuré comme un scanner laser avec au moins un plan de balayage (50) et qui comprend au moins un émetteur de lumière (22) pour l'émission de lumière d'émission (26), une unité de déviation mobile (12) pour la déviation périodique de la lumière d'émission (26) et un récepteur de lumière (32) pour la réception de la lumière d'émission (28) renvoyée par des objets dans le plan de balayage (50), l'unité de commande et d'évaluation (40) étant configurée pour mesurer des distances sur la base d'un temps de vol de la lumière d'émission (26, 28) émise et reçue à nouveau.

7. Dispositif de capteur (10) selon la revendication 6,
dans lequel le capteur de position (44) est calibré par rapport à un plan de balayage (50).

8. Procédé d'alignement pour un capteur (10), en particulier pour un dispositif de capteur selon l'une des revendications précédentes, dans lequel, au moyen d'un capteur de position (44), un alignement réel du capteur (10) est déterminé en mesurant une orientation par rapport au champ gravitationnel, est comparé à un alignement souhaité, et un résultat de comparaison est affiché, **caractérisé en ce que** le résultat de comparaison est affiché par trois sources lumineuses (46a- d) disposées à des positions réparties sur le capteur (10), chaque source lumineuse (46a- d) prenant un premier état d'affichage pour une position correcte, un deuxième état d'affichage pour un alignement trop basse, et un troisième état d'affichage pour un alignement trop élevé, les états d'affichage se rapportant à un axe représenté par la position de la source lumineuse d'affichage (46a- d).

9. Procédé d'alignement selon la revendication 8,
dans lequel le capteur (10) est configuré comme un scanner laser avec au moins un plan de balayage (50) qui est balayé périodiquement par un faisceau de balayage (26, 28), et dans lequel le capteur de position (44) est calibré au préalable par rapport au plan de balayage (50) en guidant le faisceau de balayage (26, 28) vers une cible coopérative et en prenant une image de la cible, en particulier avec une caméra IR, et en évaluant l'image pour déterminer l'alignement du plan de balayage (50).
